# EUROPEAN PATENT APPLICATION

(11) **EP 1 879 099 A1**
(43) Date of publication of application: **16.01.2008**
(21) Application number: 06014220.5
(22) Date of filing: 10.07.2006
(51) Int. Cl.: G06F 3/042

(54) **Data input device**

(71) Applicant: ERA OPTOELECTRONICS INC., Sindian City Taipei County 231 (TW)
(72) Inventor: Lin, Chih-Hsiung, Sindian City Taipei County 231 (TW); Hung, Yi-Ping, Sijhih City Taipei County 221 (TW)
(74) Representative: Viering, Jentschura & Partner

(57) **Abstract**

A data input device comprises a microprocessor electrically connected to a camera device, a mirror installed in front of a lens of the camera device to allow the camera device to take a reference image reflected by the mirror. When the microprocessor detects that the camera device takes that a user touches the reference image in at least one input zone of an image, it then generates a corresponding input signal according to that the camera device takes that the user touches input images in at least one input zone. The data input device according to the present invention can more accurately and quickly generate input signal corresponding to an input operation processed by the user and saves the production cost more.

## Description

### BACKGROUND OF THE INVENTION

### 1. Field of the Invention

The present invention relates to a data input device, and more particularly to an image touch control type input device, which can be served as a data input tool for a general portable electronic product, computer or an electronic product with an image output.

### 2. Description of Related Art

U.S. Pat. No. 6, 650, 318 entitled "Data input device" discloses optical images for a user to input data generated by a data input device. A sensor is used for sensing the operation state that a user touches at least one input zone in the optical image. A microprocessor electrically connected to the sensor to allow the operation that the user touches at least one input zone to be transferred to corresponding input signals.

The most important part of the input device is in that whether the sensor can accurately detect that a user is processing an input operation and whether the microprocessor can accurately and quickly generate output signals corresponding to the input operation of the user. If the input device cannot accurately detect the input operation processed by the user, a great deal of wrong input data will be generated; this will cause trouble for the user on inputting data. If the input device cannot accurately and quickly generate corresponding input data according to the input operation processed by the user, this will cause the input operation processed by the user to be very inconvenient. Besides, the production cost is a consideration factor on manufacturing the input device; the cheaper production cost can allow the input device to be survived in a competitive market.

### SUMMARY OF THE INVENTION

For providing a data input device capable of more accurately and quickly generating input data corresponding to an input operation processed by a user and rather saving the production cost, the present invention is proposed.

The main object of the present invention is to provide a data input device, using a digital camera to take an image that an input zone is touched and identifying whether a user is processing an input action so as to increase the accuracy of input data.

Another object of the present invention is to provide a data input device, capable of further using a vibration sensor or microphone to detect voices emitted from an input zone when it is touched so as to increase the accuracy judging whether an data inputting action is processed.

Still another object of the present invention is to provide a data input device, which has a simpler structure and the production cost is saved because of this.

### BRIEF DESCRIPTION OF THE DRAWINGS

The present invention can be more fully understood by reference to the following description and accompanying drawings, in which:
FIG. 1 is a schematic view, showing a data input device of a first preferred embodiment according to the present invention;
FIGS. 2A and 2B are schematic views, showing that images are taken by a first digital camera and a second digital camera according to the present invention;
FIGS. 3A and 3B are schematic views, showing a data input device of a second preferred embodiment according to the present invention;
FIG. 4 is a schematic view, showing a data input device of a third preferred invention according to the present invention;
FIG. 5 is a schematic view, showing pictures for an input operation processed by a user according to the present invention; and
FIG. 6 is a schematic view, showing an image on a displayed picture for an input operation processed by a user according to the present invention.

### DETAILED DESCRIPTION OF THE PREFERRED EMBODIMENTS

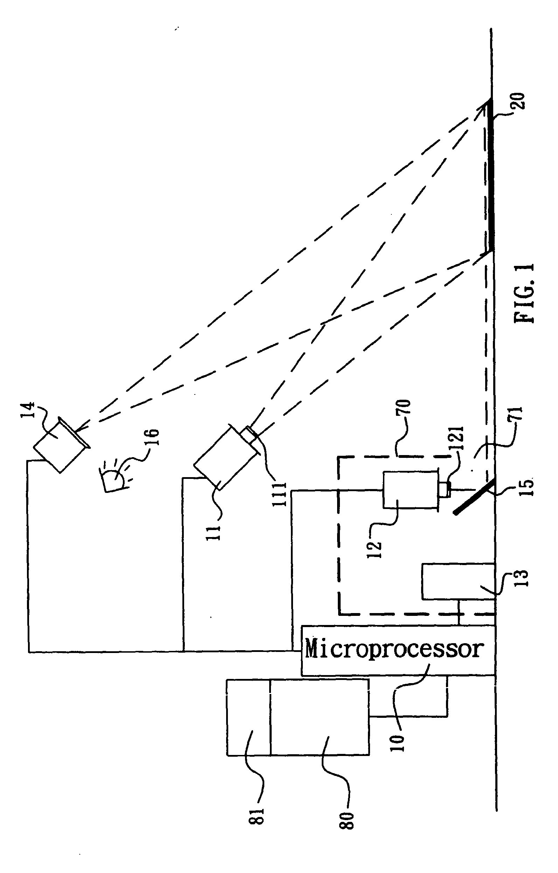

Please refer to FIG. 1. A data input device mainly comprises a microprocessor 10 electrically connected with a first digital camera 11, second digital camera 12 and vibration sensor 13, an image generating device 14 for projecting out an image 20 for a user to process an input operation, a mirror 13 located in front of a lens of the second digital camera 12 allowing the second digital camera 12 to take an image reflected from the mirror 15, and a light source 16 used for providing the illumination needed for the first digital camera 11 and the second digital camera 12 to take an image. The microprocessor 10 can also be electrically connected to an electronic product 80 in which a displayer 81 thereof is used to display the images taken by the cameras.

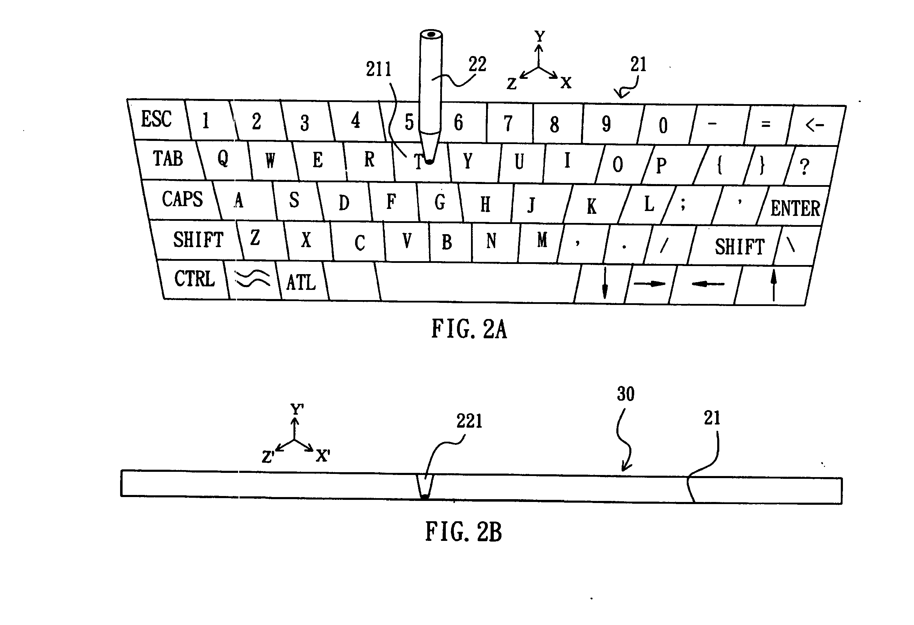

The image generating device 14, such as the one disclosed in the U.S. patent mentioned above, can project out a keyboard image 21 shown in FIG. 2A on a projection face for a user to use an input pen 22 or a finger to touch at least one input zone 211 in the keyboard image 21 to process an data input operation, in which the projection face is on the xz plane of a practical coordinate system.

The relative positions of the second digital camera 12, the mirror 15 and the image 20 are adjusted to allow the level optical axis of the second digital camera 12 to be parallel to the projection face of the image 20, i.e. the x'z' plane of the coordinate system of the second digital camera 12 is parallel to the xz plane on which the projection face is located so as to allow the second digital camera 12 merely to be able to take a reference image 30 of the image 20 and a space beyond the image 20 to a very short distance, e.g. a strip-shaped image shown in FIG. 2B. Because the second digital camera can only take a picture of an input pen image 221 in a short preset distance range beyond the keyboard image 21, if the input pen 22 leaves the upper side of the keyboard image 21 and beyond the preset distance, the second digital camera 12 can then not take an image of the input pen 22, therefore, whether a user processes an input operation can be more accurately identified.

The design of the second digital camera 12 and the mirror 15 according to the present invention can be used to take the reference image of the input operation processed on the image 20 by means of a user's finger or the input pen 22 in order to identify whether the user is processing an input operation or not. If the microprocessor 10 detects that the second digital camera 12 takes the reference image that the user touches the image 20, the microprocessor 10 then generates a corresponding input signal depending on the input image taken by the first digital camera 11; the bottom of the image of the input pen 22 touches the input zone 221 of the keyboard image 21. For example, the microprocessor 10 relatively generates an input signal of "T" when the first digital camera 11 takes the input image that the input pen 22 touches the input zone 211 of "T". The first digital camera 11 and the second digital camera 12 are combined into a camera device used to take a picture of the input image and the reference image of the input operation processed on the image 20 by means of the user's finger or the input pen 22.

The image of the input pen 22 taken by the second digital camera 12 of the present invention can provide the microprocessor 10 to identify the level position of the keyboard image 21 touched by the input pen 22, and the image of the input pen 22 is then taken by the first digital camera 11 to identify the vertical position of the keyboard image 21 touched by the input pen 22 such that which input zone 211 in the keyboard image 21 is touched by the input pen 22 can be quickly identified. Furthermore, corresponding information can be more quickly generated; the input information can then be quickly generated without needing a processor with a high speed operation function.

The vibration sensor 13 can be used to detect the vibration caused from the user's finger or the input pen touching the image. The user processing a data input operation can then be identified when the microprocessor 10 detects signals emitted from the vibration sensor 43; corresponding input signals are generated according to the images taken by the first digital camera 11 or the images taken by the first digital camera 11 and the second digital camera 12. The vibration sensor 13 is used to assist identifying whether the user touches the image and processing the input operation. Using a microphone to replace the vibration sensor can attain to a same function. The first digital camera 11 and the second digital camera 12 can be a CCD digital camera or CMOS digital camera.

The light source 16 with a specific illumination color can be used in the present invention to illuminate the user' s finger or the input pen 22 when an input operation is being processed so as to allow the images of the finger or the input pen 22 taken by the first digital camera 11 and the second digital camera 12 to have a specific color and a better identification mark.

The first digital camera 11 and the second digital camera 12 are allowed to combine respectively with filtering masks 111 and 121 with a color same as the illumination color of the light source 16 so as to allow the taken image of the finger or the input pen 22 is not influenced by light pollution.

A lighter beam can be allowed to emit out from the image generating device 14 to replace the light source 16 and a brighter beam with a specific color can also be emitted from the image generating device 14.

The present invention can also allow the second digital camera 12, the vibration sensor 13 and the mirror 15 to be installed in a case 70. The case 70 has a hole 71 therein corresponding to the mirror 15, this can allow the mirror 15 to reflect an image that a user uses the image 20 to process an data input operation. Besides, the microprocessor 10, the second digital camera 12 and the vibration sensor 13 can be combined with a wireless transmission device, this can allow the wireless transmission device to be used for transmitting image signals and vibration signals to the microprocessor 10.

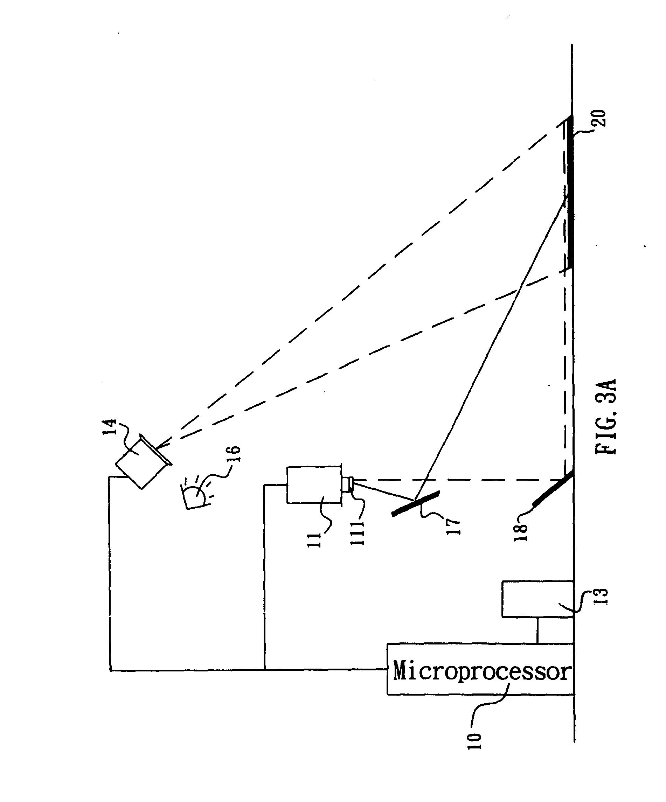

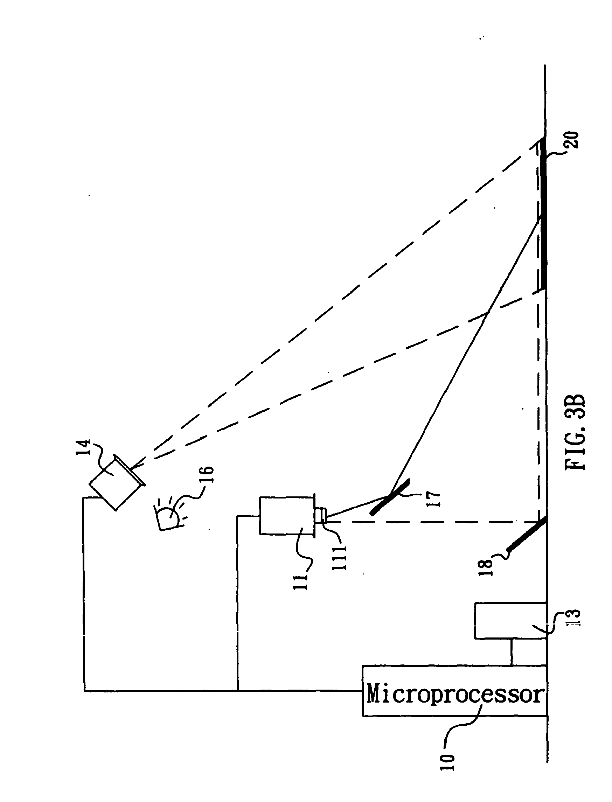

Please refer to FIGS. 3A and 3B. The figures show a data input device of a second preferred embodiment according to the present invention, in which the second digital camera 12 of the first preferred embodiment is omitted. Here, the first digital camera 11 has the functions of the second digital camera 12. But, a first mirror 17 and second mirror 18 must be installed in front of the lens of the first digital camera 11. Adjust the first mirror 17 and the second mirror 18 to proper positions, as FIGS. 3A and 3B show, the first digital camera 11 can then take the images reflected from the first mirror 17 and the second mirror 18 simultaneously, such as the keyboard image 21 and the reference image 30 shown in FIG. 2. Therefore, the structure of the data input device of the embodiment can be simplified.

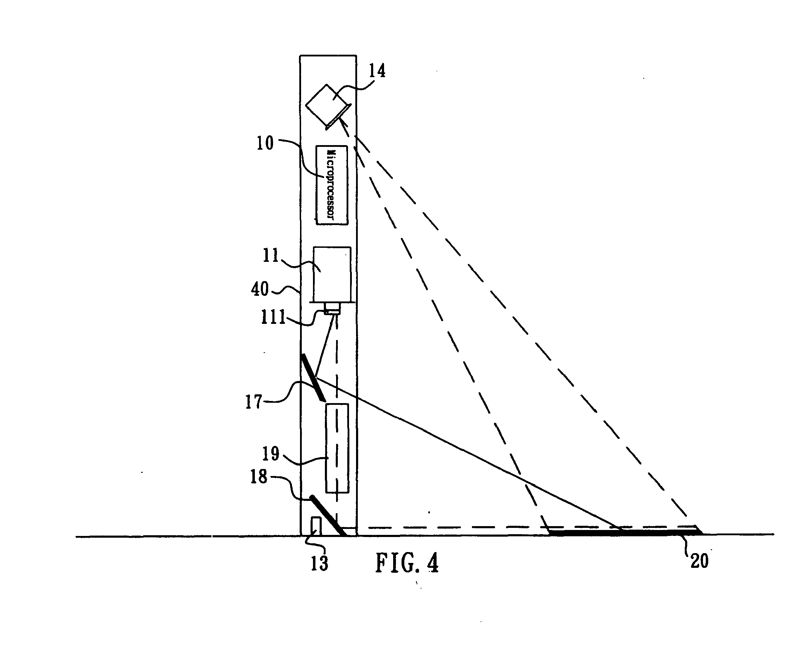

Please refer to FIG. 4. The figure shows a data input device of a third preferred embodiment according to the present invention, in which the microprocessor 10, the first digital camera 11, the vibration sensor 13 or the microphone, the image generating device 14, the first mirror 17, the second mirror 18 and a light director 19 are combined into a tubular container 40 for a convenient carrying. Holes are respectively disposed on the positions of the tubular container 40 corresponding to the vibration sensor 13 or the microphone, the image generating device 14, the first mirror 17 and the second mirror 18 for benefiting the transmissions of the vibration waves and the light. The light director 19 can be such as optical fibers or a lens set used for transmitting the image reflected from the second mirror 18 to the first digital camera 11.

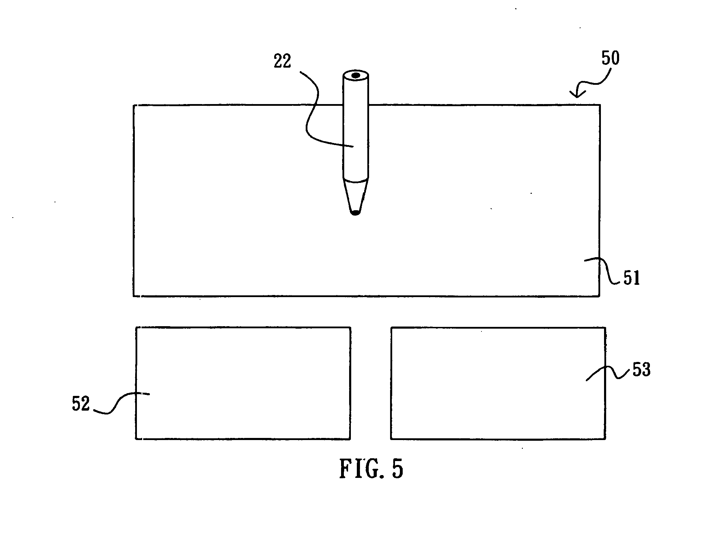

Please refer to FIG. 5. A picture 50 can also directly be placed in front of the lens of the camera set to replace the image projected from the image generating device for a user to process an input operation. But, the picture 50 must be placed at a specific position capable allowable for a lens to take images. Images on the picture consists a plurality of input zones 51, 52 and 53 for a user to process an input operation on the picture 50 through his finger or the input pen 22. The input zone 51 is similar to a touch pad of a general notebook computer for a user to control a cursor on a display picture of a display of an electronic product electrically connected to the data input device according to the present invention like a mouse does, or process an input operation such as a handwriting input. The input zones 52 and 53 are similar to left and right and left buttons of the mouse; the microprocessor will then generate corresponding input signals when the user touches the input zones 52 and 53.

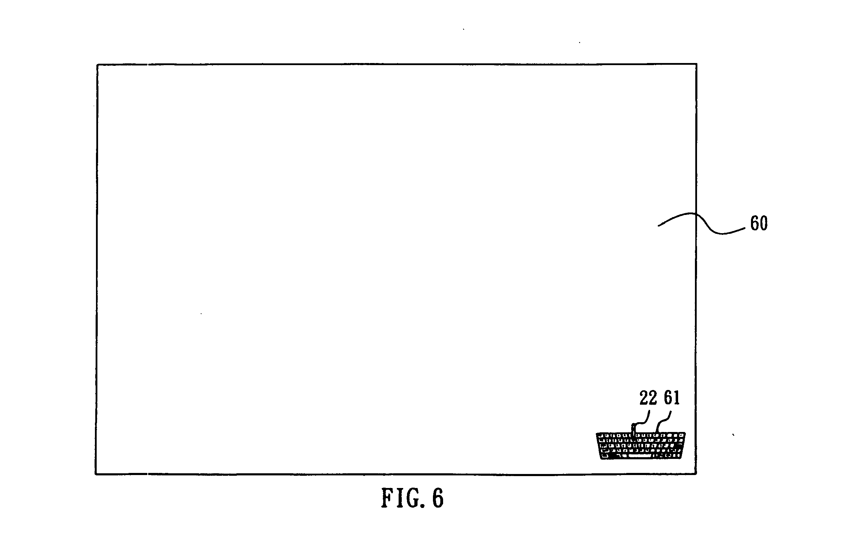

Please refer to FIG. 6. A image such as a small keyboard image 61 in a picture 60 displayed on a displaying device of a electronic device to replace with the image for a user to process an input operation projected out through the image generating device mentioned above. The user uses a finger or the input pen 22 to process an input operation on a table in front of a lens of a camera device, an image processing the input operation on the keyboard 61 through the input pen 22 can be displayed in the displayed picture 60 after the image is taken through the camera device.

The data input device according to the present invention can generate input data corresponding to the input operation processed by a user more accurately and quickly and save the production cost more.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A data input device, comprising:
a image, having at least one input zone for a user to process an input operation;
a camera device, comprising at least one camera for respectively taking input images and a reference image that said user uses said image to process said input operation;
a mirror, installed in front of said camera device, a plane x' z' of a coordinate system of said camera taking said reference image being parallel to a xz plane on which said image is located so as to allow said camera device to take said reference image including said image reflected from said mirror and a space beyond said image to a preset distance;
a microprocessor, electrically connected to said camera device□
whereby, when said microprocessor detects that said camera device take that said user touches said reference image in said at least one input zone, identifies that said user is processing a data input operation and then generates a corresponding input signal according to an input image that said user touches said at least one input zone.

2. The data input device according to claim 1, wherein said camera device comprises a first digital camera and second digital camera; whereby, said first and said second digital cameras are respectively used to take said input image and said reference image.

3. The data input device according to claim 1, wherein said camera device comprises a first digital camera, said mirror and another mirror are respectively installed in front of a lens of said first digital camera so as to allow said first digital camera to take input images used by a user to process an input operation and reflected by said mirror, and reference images.

4. The data input device according to claim 1, wherein said images are projected out from an image generating device.

5. The data input device according to claim 1, wherein said images are images on a picture.

6. The data input device according to claim 1, being further connected with an electronic product, wherein said images are images in a picture shown by a displayer of said electronic product.

7. The data input device according to claim 1, wherein said microprocessor is electrically connected to a vibration sensor so as to detect vibrations generated from the touches of a user on said image; that said user is processing an data input operation is then identified when said microprocessor detects signals emitted from said vibration sensor.

8. The data input device according to claim 4, wherein said microprocessor is electrically connected to a microphone so as to sense voices generated from a user touching said images; that said user processes an data input operation is identified when said microprocessor detects signals emitted from said microphone.

9. The data input device according to claim 4, wherein said microprocessor, said camera device, said image generating device and said mirrors are combined into a tubular container.

10. The data input device according to claim 4, wherein said a beam with a specific color is projected out from said image generating device.

11. The data input device according to claim 4, further comprising a light source for providing necessary light illumination when said camera device is taking images.

12. The data input device according to claim 7, wherein said microprocessor, said camera device, said image generating device, said vibration sensor and said mirrors are combined into a tubular container.

13. The data input device according to claim 7, wherein said camera device comprises a first digital camera and second camera; whereby, said first digital camera is used for taking said input images and said second digital is used for taking said reference image.

14. The data input device according to claim 8, wherein said microprocessor, said camera device, said image generating device, said microphone and said mirrors are combined into a tubular container.

15. The data input device according to claim 10, wherein a lens of said camera device is combined with a light filtering mask having same color as light projected out from said image generating device.

16. The data input device according to claim 11, wherein a beam with a specific color is projected from said light source.

17. The data input device according to claim 13, wherein said second digital camera, said vibration sensor and said mirror are installed in a case; a hole corresponding to said mirror is disposed in said case; whereby, said mirror is used for reflecting an image that a user uses said image to process an input operation.

18. The data input device according to claim 13, wherein said microprocessor, said second digital camera and said vibration sensor are combined with a wireless transmission device; whereby, said wireless transmission device is used for transmitting image and vibration signals wirelessly to said microprocessor.

19. The data input device according to claim 16, wherein a lens of said camera device is combined with a light filtering mask having same color as light emanated form said light source.
